(19) **Europäisches Patentamt / European Patent Office / Office européen des brevets**

(11) **EP 0 909 845 B1**

(12) **EUROPEAN PATENT SPECIFICATION**

(45) Date of publication and mention
of the grant of the patent:
**06.01.2010 Bulletin 2010/01**

(51) Int Cl.:
**D03D 15/00** *(2006.01)*    **B29C 70/22** *(2006.01)*
**B29C 70/44** *(2006.01)*

(21) Application number: **98114188.0**

(22) Date of filing: **29.07.1998**

(54) **A woven carbon fiber fabric, a fiber reinforced plastic molding obtained by using the woven fabric, and a production method of the molding**

Kohlenfasergewebe, unter Verwendung des Gewebes hergestelltes faserverstärktes Kunststoff-Formteil, und Verfahren zur Herstellung des Formteiles

Tissu en fibre de carbone, pièce moulée en plastique renforcée par des fibres obtenue en utilisant le tissu, et procédé de fabrication de la pièce moulée

(84) Designated Contracting States:
**DE ES FR GB IT NL**

(30) Priority: **04.08.1997  JP 20921397**

(43) Date of publication of application:
**21.04.1999  Bulletin 1999/16**

(73) Proprietor: **TORAY INDUSTRIES, INC.**
**Tokyo 103-8666 (JP)**

(72) Inventors:
• **Nishimura, Akira**
**Iyo-gun,**
**Ehime 791-3120 (JP)**
• **Homma, Kiyoshi**
**Oumihachiman-shi,**
**Shiga 523-0041 (JP)**

• **Horibe, Ikuo**
**Matsuyama-shi,**
**Ehime 791-0121 (JP)**

(74) Representative: **Weber, Joachim**
**Hoefer & Partner**
**Patentanwälte**
**Pilgersheimer Strasse 20**
**81543 München (DE)**

(56) References cited:
**EP-A- 0 272 083    DE-A- 2 162 174**
**US-A- 4 714 642    US-A- 4 902 215**

• **PATENT ABSTRACTS OF JAPAN vol. 096, no. 003, 29 March 1996 & JP 07 300739 A (TORAY IND INC), 14 November 1995**

**Description**

Field of the Invention:

The present invention relates to a woven carbon fiber fabric, in more detail, a woven carbon fiber fabric formed by using thick carbon fiber tows respectively comprising about 40,000 to about 400,000 carbon filaments, a fiber reinforced plastic molding obtained by using the woven carbon fiber fabric, and a production method of the molding.

Description of the Prior Arts:

Carbon fibers have a low specific gravity, high tensile strength and tensile modulus of elasticity. A carbon fiber reinforced plastic (CFRP) obtained by molding the carbon fibers immobilized by a resin attracts attention as a composite with a high strength and modulus of elasticity.

The conventional CFRP uses thin carbon fiber yarns respectively comprising about 3,000 carbon filaments. The conventional CFRP uses a thin bi-directional woven fabric with the thin carbon fiber yarns arranged longitudinal and transverse, and with the areal unit weight of carbon fibers kept in a range of about 200 to about 400 $g/m^2$. The conventional CFRP is produced by laminating many sheets of a prepreg formed by the thin bi-directional woven fabric impregnated with a resin, and molding the laminate in an autoclave.

The conventional CFRP is disadvantageously high in production cost for the reasons described below. Since it is expensive though excellent in performance, it is used only in limited areas as an aircraft related structural material and a base of high quality sporting goods, and is not applied in general industrial areas.

The conventional CFRP is expensive for the following reasons; (a) thin carbon fiber yarns are low in productivity; (b) a woven carbon fiber fabric is low in productivity, since it is produced from thin carbon fiber yarns; (c) since the obtained woven carbon fiber fabric is thin, many sheets of a woven fabric must be laminated to muster the carbon fibers necessary for producing a CFRP molding with desired properties, and in the production of CFRP, laminating many sheets of a fabric is very troublesome; (d) since the prepreg process is necessary, the cost for the prepreg process is added; and (e) an autoclave is necessary to require large equipment investment.

For cost reduction, known are the resin transfer molding method in which a room temperature curable resin is injected by pressure into a mold containing laminated sheets of woven carbon fiber fabrics, and the vacuum bag molding method in which a room temperature curable resin is injected into a mold containing sheets of woven carbon fiber fabrics laminated on it and entirely covered with a bag film and kept under reduced pressure (vacuum). These methods are effective to reduce the cost of CFRP production in terms of the above (d) and (e). However, the problems of (a) to (c) cannot be solved yet.

It can be considered to use the conventional thin carbon fiber yarns for producing a woven carbon fiber fabric with a large areal unit weight of carbon fibers, and then to mold the woven fabric into a CFRP. However, this idea is not practically applied because of the following problems. That is, (f) if a bi-directional woven fabric in which carbon fiber yarns are arranged longitudinal and transverse is formed, the woven fabric obtained is large in the areal unit weight of carbon fibers, but since the longitudinal carbon fiber yarns and the transverse carbon fiber yarns cross each other, the carbon fiber yarns are greatly bent (crimped); if the woven carbon fiber fabric is molded into a CFRP, the carbon fiber yarns are stressed locally intensively, to decline in strength and modulus of elasticity disadvantageously. Furthermore, (g) a woven fabric in which carbon fiber yarns are arranged in uni direction is not lowered in strength since the yarns are not crimped; however, if the areal unit weight of carbon fibers of the woven fabric is increased, the fiber density becomes very large, to lessen the clearances between the respectively adjacent filaments, since the carbon fiber yarns are arranged in uni direction only, and the resin flow into the clearances between filaments becomes poor, taking much time for resin injection, thus lowering the resin impregnability into the woven carbon fiber fabric in such molding as resin transfer molding or vacuum bag molding.

US-A-4 714 642 describes a bi-directional woven fabric comprising multifilamentary tows of carbon fibers, the tows comprising approximately 1,000 to 50,000 filaments.

US-A-4 902 215 describes a plastic transfer molding technique for the production of fiber reinforced plastic structures. This reference only describes the general technique without reference to a specific woven carbon fiber fabric.

Summary of the Invention:

The object of the present invention is to provide a woven carbon fiber fabric solving the problems of the above mentioned prior arts, a fiber reinforced plastic molding obtained by using said woven fabric, and a production method of said molding.

According to the invention, the object is solved by the features of the independent claims. The respective sub-claims contain further preferred developments of the invention.

To achieve the above object, the present invention uses thick carbon fiber tows with an intention to improve the resin impregnability of the woven carbon fiber fabric formed by the tows.

In this specification, a CFRP includes both the cases where the reinforcing fibers of the plastic consist of carbon fibers only and consist of carbon fibers and other fibers.

The present invention for achieving the above object is described below.

The woven carbon fiber fabric as a 1st embodiment is characterized in that many carbon fiber yarns respectively comprising about 40,000 to about 400,000 filaments and having filament interlacements between the respective filaments are arranged.

Each of the carbon fiber yarns used here is produced by oxidizing a polyacrylonitrile fiber tow comprising about 40,000 to about 400,000 filaments, treating it for carbonization, and applying a sizing agent to it for bundling the tow as a whole.

If the number of filaments of the carbon fiber yarn is less than about 40,000, it is preferable in view of the resin impregnability since the yarn is relatively thin. However, the effect of cost reduction in the production of carbon fibers is small.

If the number of filaments of each of the carbon fiber yarns constituting the woven fabric exceeds about 400,000, the effect of cost reduction in the production of carbon fibers is large. However, since the yarn is very thick, the distance from the surface to the center of the yarn is large, and the impregnation of the resin from the surface of the yarn becomes imperfect.

When each of the carbon fiber yarns constituting a woven fabric is free from filament interlacements between its very many filaments, that is, has many filaments arranged in parallel to each other, the filaments are not bent, and so stress concentration does not occur. The CFRP obtained by using the yarns can manifest its strength well, and have a high strength. However, since there are substantially no clearances between the respective filaments, the filaments are densely packed, and in addition, the yarns are thick. So, the resin does not permeate the yarns to their centers disadvantageously.

On the other hand, if filaments are interlaced, clearances are formed between the respective filaments. The clearances make bulky the carbon fiber yarns and the woven fabric formed by using them, and make them very likely to be impregnated with a resin.

The raw yarn (polyacrylonitrile fiber yarn or precursor) of the carbon fiber yarn can have its filaments interlaced as desired by adjusting the intensity of the flow in the coagulating bath or rinsing bath in the production process of the raw yarn. The filaments can be interlaced more by blowing air to the raw yarn after stretching in a bath. The carbon fiber yarn obtained by oxidizing the raw yarn and carbonizing the oxidized yarn has desired filament interlacements.

It is preferable that the diameter of each of the carbon filaments constituting the carbon fiber yarn is in a range of about 5 to about 15 microns.

It is preferable that the carbon fiber yarn has a tensile strength of about 3 to about 4 GPa and has a tensile modulus of elasticity of about 200 to about 300 GPa. The tensile strength and the tensile modulus of elasticity are as defined in JIS R 7601.

It is preferable that the carbon fiber yarns used for producing a woven fabric are impregnated with about 0.5 to about 2 wt% of a sizing agent for the convenience of weaving.

It is preferable that the carbon fiber yarns used for producing a woven fabric are not twisted, since the twisting of the yarns inhibits resin impregnation.

The woven carbon fiber fabric of the present invention as the 2nd embodiment conforms to the woven carbon fiber fabric of the 1st embodiment, wherein the hook drop value of the carbon fiber yarns is in a range of about 2 to about 30 cm.

The hook drop value shows the degree of the interlacements between the filaments constituting the carbon fiber yarn. For good resin impregnability, it is preferable that the hook drop value is less than about 30 cm. If the hook drop value is less than about 2 cm, the resin impregnability is very good, but the filaments constituting the yarn are bent greatly. The CFRP molding obtained by using the yarn is stressed locally intensively, to be low in strength.

Therefore, it is preferable that the hook drop value is in a range of about 2 to about 30 cm. A more preferable range is about 2 to about 10 cm. The method for measuring the hook drop value is described later in reference to drawings.

The woven carbon fiber fabric of the present invention as the 3rd embodiment conforms to the woven carbon fiber fabric of the 2nd embodiment, where the fineness of each of the carbon fiber yarns is in a range of about 25,000 to about 350,000 deniers.

The woven carbon fiber fabric of the present invention as the 4th embodiment conforms to the woven carbon fiber fabric of the 3rd embodiment, wherein the bulk density of the woven carbon fiber fabric is less than about 0.65 g/cm$^3$.

A woven fabric with a bulk density of less than about 0.65 g/cm$^3$ means that the woven fabric is bulky, and that many clearances exist between the filaments constituting the carbon fiber yarn. So, the CFRP molding can be easily produced not only by the resin transfer molding method and the vacuum bag molding method, but also by the hand lay-up molding method.

The bulk density (V) can be measured as follows:

$$V = w/(t \times A)$$

where "t" is the thickness of the woven fabric (cm), "A", the area of the woven fabric (cm$^2$) and "w" is the weight of the carbon fibers in the area A of the woven fabric (g).

The thickness "t" of the woven fabric is measured using a dial gauge as the thickness gauge referred to in clause 5.6 of JIS R 6702. In this case, a load of 3 kPa is applied to five overlying woven fabric sheets, and the thickness is measured 20 seconds after the application of the load, and is divided by the number of woven fabric sheets, to obtain the thickness per sheet. In the case of a uni-directional woven fabric, woven fabric sheets are overlaid in such a manner that the auxiliary yarns of the weft threads of respective overlying woven fabric sheets do not overlie each other, in order to keep the influence of the weft threads on the thickness of the woven fabric as small as possible.

The woven carbon fiber fabric of the present invention as the 5th embodiment conforms to the woven carbon fiber fabric of the 2nd embodiment, wherein the number of filaments of each of the carbon fiber yarns is in a range of about 40,000 to about 100,000, the fineness of each of the carbon fiber yarns is in a range of about 30,000 to about 70,000 deniers, and the areal unit weight of the carbon fibers of the woven carbon fiber fabric is in a range of about 400 to 700 g/m$^2$.

The woven carbon fiber fabric of the present invention as the 6th embodiment conforms to the woven carbon fiber fabric of any one of the 1st through 5th embodiments, wherein the warp threads are formed by arranging said carbon fiber yarns and the weft threads are formed by arranging auxiliary yarns in such a manner that the carbon fiber yarns as warp threads and the auxiliary yarns as weft threads form a woven structure.

The woven carbon fiber fabric of the present invention as the 7th embodiment conforms to the woven carbon fiber fabric of the 6th embodiment, wherein the clearances between the adjacent carbon fiber yarns are in a range of about 0.2 to 2 mm.

The clearances between the carbon fiber yarns are measured as described below.

From three different places in transverse and longitudinal directions of a woven fabric, 17 cm x 17 cm samples are taken. From the respective samples, photo images each of which is expanded 200% in both long and broad are obtained. On the obtained images, all the clearances between warp threads or weft threads are measured down to 0.1 mm by vernier calipers. The obtained clearances are averaged. Half the obtained average value is the clearance between carbon fiber yarns.

The woven carbon fiber fabric of the present invention as the 8th embodiment conforms to the woven carbon fiber fabric of the 6th embodiment, wherein the warp threads and the weft threads are bonded at their intersections by a polymer with a low melting point.

The woven carbon fiber fabric of the present invention as the 9th embodiment conforms to the woven carbon fiber fabric as the 7th embodiment, wherein the warp threads and the weft threads are bonded at their intersections by a polymer with a low melting point.

The woven carbon fiber fabric of the present invention as the 10th embodiment conforms to the woven carbon fiber fabric of any one of the 1st through 5th embodiments, wherein the warp threads are formed by arranging the carbon fiber yarns and auxiliary yarns and the weft threads are formed by arranging auxiliary yarns in such a manner that the auxiliary yarns of the warp threads and the auxiliary yarns of the weft threads form a woven structure which keeps the carbon fiber yarns of the warp threads substantially straight.

The woven carbon fiber fabric of the present invention as the 11th embodiment conforms to the woven carbon fiber fabric of the 10th embodiment, wherein the warp threads and the weft threads are bonded at their intersections by a polymer with a low melting point.

The woven carbon fiber fabric of the present invention as the 12th embodiment conforms to the woven carbon fiber fabric of any one of the 1st through 5th embodiments, wherein the warp threads are formed by arranging said carbon fiber yarns and the weft threads are formed by arranging said carbon fiber yarns in such a manner that the carbon fiber yarns of the warp threads and the carbon fiber yarns of the weft threads form a woven structure.

The woven carbon fiber fabric of the present invention as the 13th embodiment conforms to the woven carbon fiber fabric of the 12th embodiment, wherein the warp threads and the weft threads are bonded at their intersections by a polymer with a low melting point.

The woven carbon fiber fabric of the present invention as the 14th embodiment conforms to the woven carbon fiber fabric of any one of the 1st through the 5th embodiments, wherein the warp threads are formed by arranging the carbon fiber yarns and auxiliary yarns and the weft threads are formed by arranging the carbon fiber yarns and auxiliary yarns, in such a manner that the auxiliary yarns of the warp threads and the auxiliary yarns of the weft threads form a woven structure which keeps the carbon fiber yarns of the warp threads and the carbon fiber yarns of the weft threads substantially straight.

The woven carbon fiber fabric of the present invention as the 15th embodiment conforms to the woven carbon fiber fabric of the 14th embodiment, wherein all the warp threads and the auxiliary yarns of the weft threads, or the auxiliary yarns of the warp threads and all the weft threads are bonded at their intersections by a polymer with a low melting point.

The fiber reinforced plastic molding of the present invention as the 1st embodiment, which is produced by integrating a fibrous material and a resin, characterized in that the fibrous material is composed of the woven carbon fiber fabric of any one of the 1st through the 15th embodiments.

The fiber reinforced plastic molding of the present invention as the 2nd embodiment conforms to the fiber reinforced plastic molding of the 1st embodiment, wherein a molding member is provided in addition to the fiber reinforced plastic and has grooves on the side to face the fiber reinforced plastic, and the grooves are filled with said resin.

The method for producing the fiber reinforced plastic molding of the present invention as the 1st embodiment, by using a vacuum bag molding apparatus composed of a mold, a fibrous material placed on the mold, a bag film installed on the mold so as to contain the fibrous material inside and to seal the inside from the outside, a resin supply pipe for supplying a resin to be molded, through the bag film into inside the bag film, a resin supply control valve installed on the resin supply pipe, and an air exhaust opening for keeping the space in the bag film at a reduced pressure, characterized in that the fibrous material is partially or wholly formed by the woven carbon fiber fabric of any one of the 1st to 15th embodiments, that the resin is a room temperature curable resin, and that a diffusion medium for diffusing the flow of the resin is provided in contact with the fibrous material.

The method for producing a fiber reinforced plastic molding of the present invention as the 2nd embodiment, by using a vacuum bag molding apparatus composed of a mold, a fibrous material placed on the mold, a bag film installed on the mold so as to contain the fibrous material inside and to seal the inside from the outside, a resin supply pipe for supplying a resin to be molded, through the bag film into inside the bag film, a resin supply control valve installed on the resin supply pipe, and an air exhaust opening for keeping the space in the bag film at a reduced pressure, characterized in that the fibrous material is partially or wholly formed by the woven carbon fiber fabric of any one of the 1st to 15th embodiments, that the resin is a room temperature curable resin, and that a molding member with grooves for diffusing the flow of the resin is provided in contact with the fibrous material.

The method for producing a fiber reinforced plastic molding of the present invention as the 3rd embodiment conforms to the method for producing a fiber reinforced plastic molding of the 2nd embodiment, wherein the molding member is a foam.

Brief Description of the Drawings:

Fig. 1 is a plan view showing an embodiment of the woven carbon fiber fabric of the present invention.
Fig. 2 is a plan view showing another embodiment of the woven carbon fiber fabric of the present invention.
Fig. 3 is a plan view showing a further other embodiment of the woven carbon fiber fabric of the present invention.
Fig. 4 is a plan view showing a still further other embodiment of the woven carbon fiber fabric of the present invention.
Fig. 5 is a plan view showing an example of a woven carbon fiber fabric. This embodiment does not form part of the claimed invention but represents background art that is useful for understanding the invention.
Fig. 6 is a schematic longitudinal sectional view showing an example of the apparatus for producing a fiber reinforced plastic molding of the present invention.
Fig. 7 is a schematic perspective view showing an example of the resin diffusion medium used in the apparatus shown in Fig. 6.
Fig. 8 is a schematic longitudinal sectional view showing another example of the apparatus for producing a fiber reinforced plastic molding of the present invention.
Fig. 9 is a schematic top perspective view showing an example of the molding member with grooves used in the apparatus shown in Fig. 8.
Fig. 10 is a schematic front perspective view showing a hook drop value measuring instrument.
Fig 11 is an expanded front view showing the hook and the weight used in the instrument shown in Fig. 10
Fig. 12 is a schematic front view showing the bottom of the instrument shown in Fig. 10.

Description of the Preferred Embodiments:

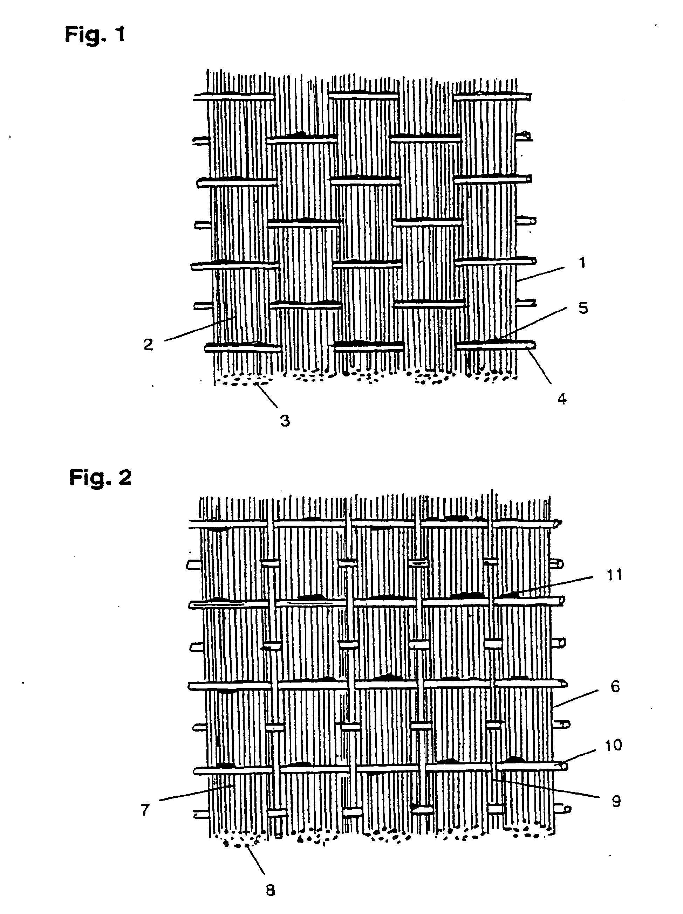

An embodiment of the woven carbon fiber fabric of the present invention is described below in reference to Fig. 1.

The woven carbon fiber fabric shown in Fig. 1 is a uni-directional woven fabric. The woven carbon fiber fabric 1 has many carbon fiber yarns 2 arranged. Each of the carbon fiber yarns 2 consists of about 40,000 to about 400,000 carbon filaments 3. The carbon filaments 3 have filament interlacements.

The warp threads arranged to form the woven structure of the woven fabric 1 are the carbon fiber yarns 2, and the weft threads arranged are auxiliary yarns 4. The auxiliary yarns 4 have a low temperature melting polymer deposited, and after the polymer is molten, solidified portions 5 are formed to bond the auxiliary yarns 4 to the carbon fiber yarns 2.

Another embodiment of the woven carbon fiber fabric of the present invention is described below in reference to Fig. 2.

The woven carbon fiber fabric shown in Fig. 2 is a uni-directional woven fabric. The woven carbon fiber fabric 6 has many arranged carbon fiber yarns 7. Each of the carbon fiber yarns 7 consists of about 40,000 to about 400,000 carbon filaments 8. The carbon filaments 8 have filament interlacements.

The warp threads arranged to form the woven structure of the woven fabric 6 are first auxiliary yarns 9, and weft threads arranged are second auxiliary yarns 10. In a woven structure formed by these auxiliary yarns 9 and 10, the respective carbon fiber yarns 7 are arranged in the direction of the warp threads (the first auxiliary yarns 9) across the weft threads (the second auxiliary yarns 10). The second auxiliary yarns 10 have a low temperature melting polymer deposited, and after the polymer is molten, solidified portions 11 are formed to bond the second auxiliary yarns 10 to the carbon fiber yarns 7.

In this woven fabric 6, the carbon fiber yarns 7 are arranged like a sheet, and the second auxiliary yarns 10 are located alternately on the right and wrong sides of the sheet. The first auxiliary yarns located between the respective carbon fiber yarns 7 and the second auxiliary yarns 10 form the woven structure. As a result, the respective carbon fiber yarns 7 do not have the bends (crimps) formed by a woven structure. The CFRP formed by using this woven fabric is not stressed locally intensively and has a high strength.

The auxiliary yarns woven to form the woven fabric do not substantially bear the loads in the molding, and are used to keep the form of the woven fabric till the molding is produced, i.e., used to form the woven structure. Therefore, the fineness of each of the auxiliary yarns is required to be in a range of about 100 to about 2,000 deniers, and it is preferable that they are thinner than the mainly used carbon fiber yarns.

It is especially preferable that the fineness of each of the auxiliary yarns is in a range of about 100 to about 500 deniers, being very thinner than that of the carbon fiber yarns and that the density of the auxiliary yarns of the weft threads is in a range of about 0.5 to about 8 picks/cm, since the woven fabric becomes bulky while the auxiliary yarns of the weft threads constrain the carbon fiber yarns less.

It is preferable that the dry heat shrinkage at 150°C of the auxiliary yarns is less than about 0.1% for securing the dimensional stability of the woven fabric and for preventing the shrinkage caused by heating when the low temperature melting polymer is used for bonding at the intersections between the warp and weft threads. The fibers used as the auxiliary yarns can be carbon fibers, glass fibers or polyaramid fibers.

In the above uni-directional woven fabric, it is preferable that the areal unit weight of carbon fibers is in a range of about 400 to about 2,000 g/m$^2$, since the number of the woven fabric sheets laminated for obtaining the desired properties of CFRP can be small, to lessen the trouble of fibrous material lamination work at the time of molding, hence saving the labor for molding.

It is preferable that the clearances between the respectively adjacent carbon fiber yarns are in a range of about 0.2 to about 2 mm, since the clearances becomes the passages of the resin injected into the fibrous material enclosed in a mold and a bag film in resin transfer molding or vacuum bag molding, to shorten the resin injection time for enhancing the molding efficiency.

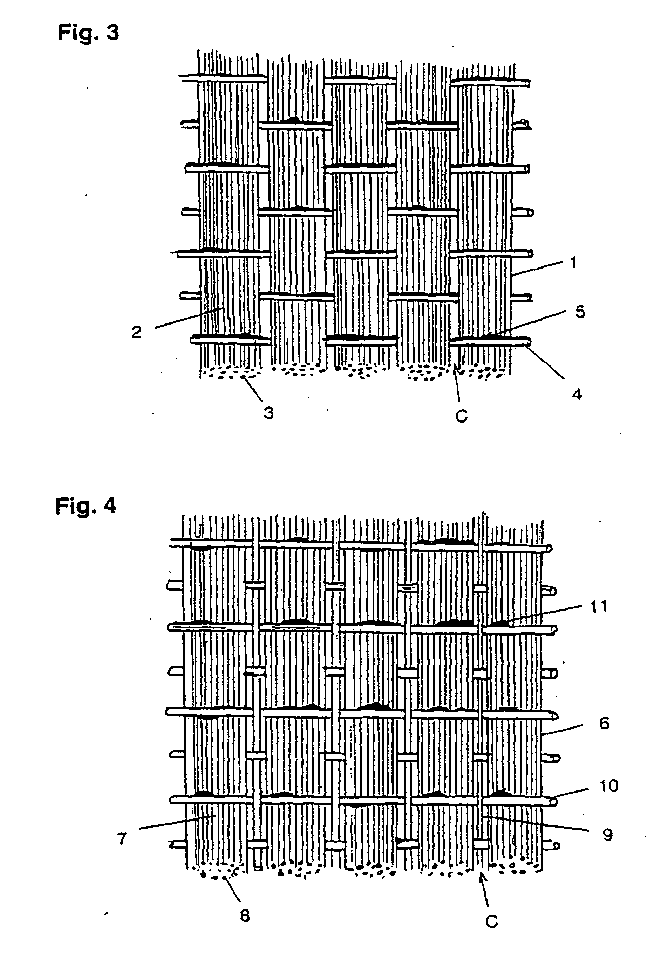

Uni-directional woven fabrics with clearances formed between the respectively adjacent carbon fiber yarns are shown in Figs. 3 and 4. Fig. 3 shows a woven fabric with clearances C formed between the respectively adjacent carbon fiber yarns 2 in the woven fabric 1 shown in Fig. 1. Fig. 4 shows a woven fabric with clearances C formed between the respectively adjacent carbon fiber yarns 7 in the woven fabric 6 shown in Fig. 2.

In a uni-directional woven fabric, if the number of filaments constituting each of the carbon fiber yarns is in a range of about 40,000 to about 400,000, the yarn fineness is in a range of about 30,000 to about 70,000 deniers, and the areal unit weight of carbon fibers is in a range of about 400 to about 700 g/m$^2$, then the woven carbon fiber fabric becomes bulky, and when the FRP obtained by using the woven carbon fiber fabric is molded by the hand lay-up molding method using a room temperature curable resin with a viscosity of about 2 to 7 poises, the woven carbon fiber fabric can be sufficiently impregnated with the resin by an ordinary impregnation roller.

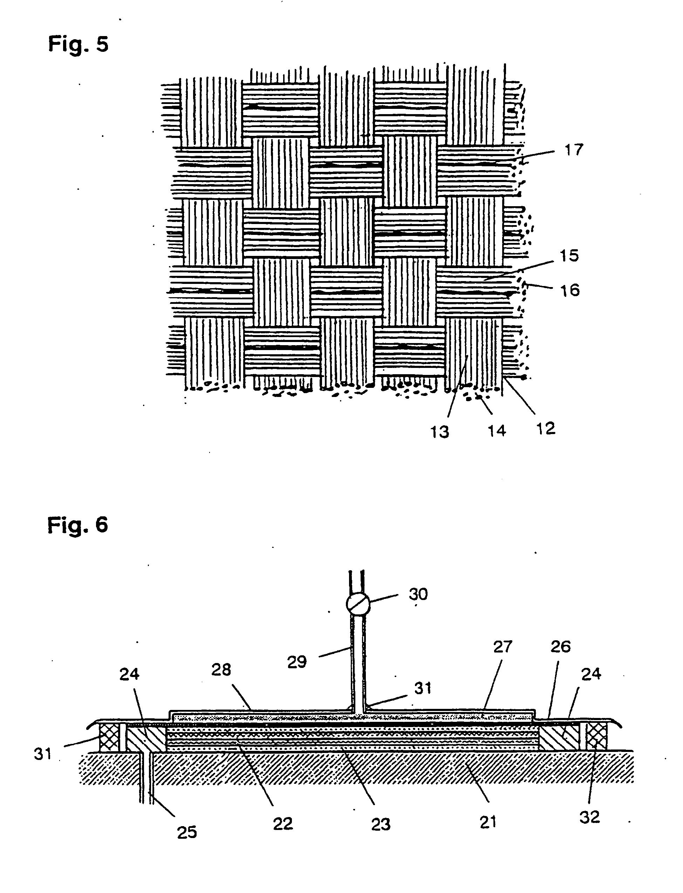

An example of a woven carbon fiber fabric is described below in reference to Fig. 5.

The woven carbon fiber fabric shown in Fig. 5 is a bidirectional woven fabric. The woven carbon fiber fabric 12 has many carbon fiber yarns 13 and 15 arranged. Each of the carbon fiber yarns 13 or 15 consists of about 40,000 to about 400,000 carbon filaments 14 or 16. The carbon filaments 14 and 16 have filament interlacements.

The warp threads arranged to form the woven structure of the woven fabric 12 are the carbon fiber yarns 13, and the weft threads arranged are the carbon fiber yarns 15. The carbon fiber yarns 15 of the weft threads have a low temperature melting polymer deposited partially on the surfaces, and after the polymer is molten, solidified portions 17 are formed, to bond the carbon fiber yarns 15 of the weft threads to the carbon fiber yarns 13 of the warp threads.

The reason why a low temperature melting polymer is used for bonding the weft threads to the carbon fiber yarns in the above three embodiments is as follows. Since the thickness of each of the carbon fiber yarns used in the woven carbon fiber fabric of the present invention is very larger than that of the carbon fiber yarns used in the conventional woven carbon fiber fabric, the number of intersections between the warp threads and the weft threads directly contributing to the woven structure is small in the woven carbon fiber fabric of the present invention. So, when the woven fabric is cut, the carbon fiber yarns are likely to be frayed, to inconvenience the handling of the woven fabric. The bonding by the low temperature melting polymer is intended to fasten the yarns of the woven fabric and improves the handling convenience of the woven fabric. Since the woven carbon fiber fabric of the present invention in which the warp and weft threads are fastened at their intersections is substantially prevented from yarn fraying at the time of cutting, the working convenience is greatly improved in the resin transfer molding or vacuum bag molding in which cut sheets of a woven fabric must be laminated in a mold.

The low temperature melting polymer is deposited on either or both of the warp threads and the weft threads in lines or dots.

It is preferable that the amount of the low temperature melting polymer is less than about 6 $g/m^2$ since a larger amount of it inhibits resin impregnation and lowers the mechanical properties of CFRP. However, if the amount is less than about 0.5 $g/m^2$, the effect of fastening the warp and weft threads at their intersections becomes weak. So, the preferable range is about 0.5 to about 6 $g/m^2$.

In the case of a uni-directional woven carbon fiber fabric, if the low temperature melting polymer is deposited on the thin auxiliary yarns in a large amount, the breaking of the woven fabric is likely to occur at the auxiliary yarns. To prevent it, it is desirable to keep the amount of the deposited low temperature melting polymer at 40 wt% or less of the weight of the auxiliary yarns.

The low temperature melting polymer can be usually selected from polyamides, copolyamides, polyesters, copolyesters, polyvinylidene chloride, polyvinyl chloride and polyurethane. A copolyamide is especially preferable since it can be molten at a low temperature, is high in adhesive strength and can provide the expected thread fastening effect by a slight amount.

In the fiber reinforced plastic molding of the present invention, if the fibrous material existing there is formed by one woven fabric sheet, the woven fabric used is the woven carbon fiber fabric of the present invention. If the fibrous material consists of a plurality of woven fabric sheets, at least one of the woven fabric sheets is the woven carbon fiber fabric of the present invention. Other woven fiber fabrics used with the at least one sheet of the woven carbon fiber fabric of the present invention can be woven reinforcing fiber fabrics of glass fibers or polyaramid fibers, etc.

The matrix resins which can be used include thermosetting resins such as epoxy resins, unsaturated polyester resins, vinyl ester resins and phenol resins, and thermoplastic resins such as polyamide resins, polyester resins, ABS resins, polyethylene resin, polypropylene resin, polyvinyl chloride resin, polyether ether ketone resins and polyphenylene sulfide resin.

The fiber reinforced plastic molding of the present invention uses a woven carbon fiber fabric very large in the areal unit weight of carbon fibers and yet bulky as the fibrous material. So, at the time of molding, the fibrous material can be well impregnated with the matrix resin, and the obtained molding is excellent in mechanical properties and inexpensive.

The fiber reinforced plastic molding obtained by using the woven carbon fiber fabric of the present invention can be produced by any of various conventionally known molding methods and apparatuses. The woven carbon fiber fabric of the present invention which is large in the areal unit weight of carbon fibers and yet bulky is especially suitable for the resin transfer molding and the vacuum bag molding, and large moldings can be produced at a low cost by these molding methods.

The fiber reinforced plastic molding of the present invention as the 1st embodiment and the production method thereof are described below in reference to Fig. 6.

In Fig. 6, on a mold 21, a predetermined number of sheets of woven fabrics 22 including the woven carbon fiber fabric of the present invention are laminated. These laminated sheets of woven fabrics 22 form a fibrous material 23 of the fiber reinforced plastic molding to be produced.

Around the lateral sides of the fibrous material 23, an edge breather 24 is provided, and an air suction opening 25 connected to a vacuum pump (not illustrated) is provided on the under face of the edge breather. The edge breather 24 is a laminate comprising many porous sheets such as woven fabrics.

On the fibrous material 23 and the edge breather 24, a peel ply 26 is laminated as a sheet to be peeled and removed after the matrix resin has been cured. On the peel ply 26, a diffusion medium 27 is placed to diffuse the resin over the entire surface of the fibrous material 23.

On the upper face and lateral faces of the diffusion medium 27 and on the upper face of the peel ply 26 placed on the edge breather 24, a bag film 28 is placed to cover them.

A resin supply pipe 29 connected at one end with a matrix resin supply tank (not illustrated) and opened in the diffusion medium 27 through the bag film 28 at the other end is installed at the center on the upper face of the bag film 28. The resin supply pipe 29 has a resin supply control valve 30 at an intermediate position.

The connection between the resin supply pipe 29 and the bag film 28 and the peripheral clearance between the bag film 28 and the mold 21 are sealed by sealants 31 and 32 respectively.

The resin tank (not illustrated) contains a room temperature curable thermosetting resin (matrix resin) syrupy at room temperature mixed with a predetermined amount of a curable agent.

The air in the space of the fibrous material 23 covered with the bag film 28 is discharged by a vacuum pump (not illustrated) through the suction opening 25 till the space reaches a reduced pressure of about 700 to about 760 Torrs. Then, the valve 30 is opened, to start the supply of the resin into the fibrous material 23.

The resin flow resistance in the plane direction of the diffusion medium 27 is smaller than that in the normal direction of the fibrous material 23. So, the resin spreads over the entire face of the diffusion medium 27 and then permeates the fibrous material 23 in the normal direction. According to this method, since the distance for the resin to permeate the fibrous material 23 is substantially the thickness of the fibrous material 23, the impregnation of the resin into the fibrous material 23 as a whole is completed very soon. The vacuum pump (not illustrated) is operated at least till the impregnation of the resin into the fibrous material 23 is completed.

After completion of resin impregnation, the valve 30 is closed. The mold is allowed to stand at room temperature till the injected resin is cured. After the resin has been cured, the bag film 28, diffusion medium 27 and peel ply 26 are removed, and the FRP molding is taken out of the mold 21.

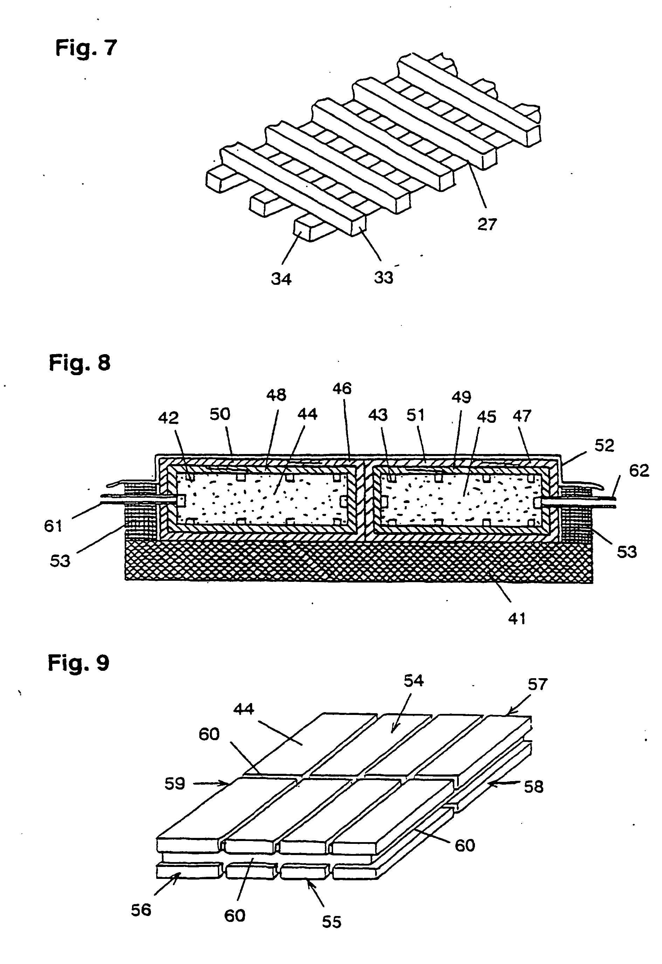

An example of the diffusion medium 27 is shown in Fig. 7. In Fig. 7, the diffusion medium 27 consists of many bars 33 and 34 arranged at predetermined intervals. The bars 33 and the bars 34 are arranged substantially to be perpendicular to each other.

Clearances are formed between the respectively adjacent bars 33 and between the respectively adjacent bars 34. These clearances form the passages of the resin. The bars 33 contact the bag film 28 at their tops, and the bars 34 contact the peel ply 26 at their bottoms.

If the pressure in the space sealed by the bag film 28 is reduced through the suction opening 25, the resin flows into the center of the diffusion medium 27 trough the resin supply pipe 29. The injected resin flows through the clearances between the bars 33 and 34. The flow of the resin causes the resin to penetrate the peel ply 26 and to diffuse substantially uniformly over the entire surface of the fibrous material 23.

The thickness of each of the bars 33 and 34 is not especially limited, but it is preferable that the thickness is in a range of about 0.2 to about 2 mm. It is preferable that clearances between the bars 33 and 34 are in a range of about 0.2 to about 2 cm. The bars 33 and 34 can be, for example, made of polypropylene, polyethylene, polyester or polyvinyl chloride, or can be a metallic meshed sheet. The meshed sheet can be a meshed film, woven fabric, knitted fabric or net, etc. The bars 33 and 34 can also be formed by overlaying a plurality of meshed sheets as required.

The fiber reinforced plastic molding of the present invention as the 2nd embodiment consists of a fiber reinforced plastic with the woven carbon fiber fabric of the present invention contained in it and another molding member. The molding member has grooves on the side facing the fiber reinforced plastic, and the grooves are filled with the resin used to form the fiber reinforced plastic.

The molding has a fibrous material laminated on the molding member with grooves formed as passages of a resin, and is furthermore covered entirely with a back film. The inside covered with the bag film is kept in vacuum (reduced pressure), and the resin is diffused through the grooves of the molding member in contact with the fibrous material. Then, while the fibrous material laminate is impregnated with a room temperature curable resin, the fibrous material and the molding member are integrated, to produce the molding. In this method, the grooves formed in the molding member allow the resin to be easily diffused, with the FRP used as a surface member or a back member, and a fiber reinforced plastic molding in which the FRP and the molding member are integrated can be simply produced.

An embodiment of the fiber reinforced plastic molding of the present invention as the 2nd embodiment and the production method thereof is described below in reference to Figs. 8 and 9.

In Fig. 8, on a mold 41, molding blocks 42 and 43 with the same structure are placed. The molding block 42 (43) is formed by a molding member 44 (45) and a fibrous material 46 (47) surrounding it. The fibrous material 46 (47) is a two-layer laminate comprising a woven fabric 48 (49) positioned inside and a woven fabric 50 (51) positioned outside. At least either of the woven fabrics 48 and 50 is the woven carbon fiber fabric of the present invention. Furthermore, at least either of the woven fabrics 49 and 50 is the woven carbon fiber fabric of the present invention.

The molding blocks 42 and 43 are covered with a bag film 52, and at the periphery of the bag film 52, the bag film 52 is connected with the mold 41 by a sealant 53, to keep the inside of the bag film 52 sealed from the outside fluid-tightly.

An example of the molding member 44 (45) is shown in Fig. 9. In Fig. 9, the molding member 44 has grooves 60 in the top face 54, bottom face 55, front face 56, rear face 57, right-hand side face 58 and left-hand side face 59. These grooves 60 act as the passages of the resin when the molding is produced.

A resin supply pipe 61 connected to a resin supply tank (not illustrated) is opened to the surface of the molding member 44 through the sealant 53 and the fibrous material 46. A suction pipe 62 connected to a vacuum pump (not illustrated) is opened to the surface of the molding member 45 through the sealant 53 and the fibrous material 47.

If the vacuum pump is actuated, to reduce the pressure in the space sealed by the bag film 52 through the suction pipe 62, the matrix resin flows into the space through the resin supply pipe 61 from the resin supply tank. The injected resin flows in the grooves small in flow resistance formed in the molding members 44 and 45, to diffuse into the molding members 44 and 45 entirely. Then, the impregnation of the resin into the fibrous materials 46 and 47 takes place.

After the impregnation of the resin into the fibrous materials 46 and 47 has been completed, the supply of the resin is stopped, and the mold 41 is allowed to stand at room temperature. The matrix resin contained in the fibrous materials 46 and 47 and the resin filling the grooves 60 are cured, to integrate the fibrous materials 46 and 47 and the molding members 44 and 45, to produce a fiber reinforced plastic molding.

In this embodiment, each of the fibrous materials is formed by two layers of woven carbon fabrics, but the number of woven fabric layers laminated can be selected as required. Each of the fibrous materials can also contain any other woven fabric than the woven carbon fiber fabric.

In this embodiment, the number of molding blocks is two, but it can be selected as required.

The fiber reinforced plastic molding of the present invention as the 2nd embodiment has the fiber reinforced plastic and the molding members strongly integrated, not only since the fiber reinforced plastic and the molding members are bonded at the interfaces between the fiber reinforced plastic and the molding members but also since the grooves of the molding members are integrated with the matrix resin.

The sectional form of the grooves of the molding members can be rectangular, trapezoidal or semicircular, etc., and the sectional form and dimensions can be decided properly, depending on the flowability of the resin and the bonding degree between the fiber reinforced plastic and molding members. It is especially preferable that the sectional form of the grooves is like a wedge wider in the bottom of each groove than at the top of the groove, since the fiber reinforced plastic and the molding members can be bonded strongly.

The molding members can be formed by any of various materials such as resins, metals and timber. It is preferable that the molding members are formed by an organic or inorganic foam, since the obtained molding can be light in weight. The organic or inorganic foam can be a foam of polyurethane, polystyrene, polyethylene, polypropylene, PVC, silicone, isocyanurate, phenol or acrylic resin, light-weight regular concrete, calcium silicate foam or calcium carbonate foam, etc.

It is preferable that the compressive strength of the molding members is more than about 1.0 kgf/cm$^2$. If the compressive strength is less than about 1.0 kgf/cm$^2$, bag molding members may be crushed in the case of vacuum bag molding.

The molding method described above is a vacuum bag molding method, but since a resin is diffused over the entire surface of the fibrous material using a diffusion medium as soon as the resin is injected, it is different from the conventional vacuum bag molding method. According to the molding method of the present invention, a large FRP molding can be easily produced.

The woven carbon fiber fabric of the present invention is large in the areal unit weight of carbon fibers per sheet and yet is bulky since the carbon filaments are interlaced with each other, having clearances between the carbon filaments. According to the method for producing a fiber reinforced plastic molding of the present invention, the resin flow in the plane direction of the fibrous material is assured, and the fibrous material itself has a structure to allow easy resin flow. So, the trouble in the lamination work of the fibrous material is less and the impregnation of the resin into the fibrous material laminate can be effected perfectly. Furthermore, the resin injection time can be shortened, to remarkably improve the molding work efficiency.

The fibrous material is not required to be formed by the woven carbon fiber fabric of the present invention alone, and at least one layer in the fibrous material is required to be the woven carbon fiber fabric of the present invention. The other layers in the fibrous material than the woven carbon fiber fabric sheet of the present invention can be of any ordinary woven carbon fiber fabric or can be any ordinary woven fabric, chopped strand mat or continuous strand mat, etc. formed by the other reinforcing fibers such as glass fibers or polyaramid fibers. Further, he other layers in the fibrous material than the woven carbon fiber fabric sheet of the present invention may be of a multi-axially stitched cloth comprising laminated sheets each of which is formed by the reinforcing fibers each of which is arranged in parallel wherein the sheets are arranged the fibers in different directions such as 0° direction (longitudinal direction of the fibrous material), 90° direction (transverse direction of the fibrous material) or ±45° direction (oblique direction of the fibrous material) and sewn with a stitching yarn such as glass fibers, polyester fibers or polyamide fibers, etc.

Especially in the case of a fibrous material comprising the uni-directional woven carbon fiber fabric of the present invention and the multi-axially stitched cloth, the FRP molding produced by using it can have such a structure that the molding is reinforced in the main necessary direction by the unidirectional woven carbon fiber fabric and reinforced in the other directions by the multi-axially stitched cloth.

The fibrous material has a large fiber content by volume, since the carbon fiber yarns and other reinforcing fiber yarns are not interlaced with each other and are arranged straight without being bent. The FRP molding produced by using the fibrous material is excellent in mechanical properties. Since the carbon fibers and other reinforcing fibers are not clamped by the interlacements between yarns, the fibrous material can be sufficiently impregnated with a resin in the vacuum bag molding, and the impregnation rate is also high.

The resins which can be used in the fiber reinforced plastic molding of the present invention include room temperature curable resins liquid at room temperature such as epoxy resins, unsaturated polyester resins, vinyl ester resins and phenol resins. It is preferable that the viscosity of the resin is low, i.e., in a range from about 0.5 to about 10 poises in view of resin impregnability and impregnation rate. A more preferable range is about 0.5 to about 5 poises. Especially a vinyl ester resin can be preferably used for such reasons that it is excellent in moldability since it can be low in viscosity and as large as about 3.5 to about 12% in elongation, and that the molding obtained has high strength and excellent impact resistance.

The peel ply is a sheet peeled and removed from the FRP after the resin has been cured, and must allow the passage of the resin during molding work. It can be, for example, a woven polyamide fiber fabric, woven polyester fiber fabric or woven glass fiber fabric. Since the woven polyamide fiber fabric and the woven polyester fiber fabric are inexpensive, they can be preferably used. However, to prevent that the oil and sizing agent used when the woven fabric is produced go into the resin of the FRP, it is preferable to scour the woven fabric before use, and furthermore, to prevent the shrinkage of the room temperature curable resin by curing heat, it is preferable to heat-set the woven fabric before use.

The edge breather must be able to allow the passage of air and resin. The edge breather can be, for example, a woven polyamide fiber fabric, woven polyester fiber fabric, woven glass fiber fabric or a mat of polyamide fibers or polyester fibers.

The bag film must be air-tight. It can be, for example, a polyamide film, polyester film or PVC film.

The method for measuring the hook drop value is described below in reference to Figs. 8, 9 and 10.

The hook drop value expresses the degree of interlacements between the respective carbon filaments constituting the carbon fiber yarns in the woven carbon fiber fabric of the present invention. The hook drop value expressing the degree of interlacements is hereinafter expressed as $FD_{(15)}$. The $FD_{(15)}$ is measured as follows.

Three 1,000 mm wide and 1,000 mm long pieces are sampled from the woven carbon fiber fabric of the present invention, and the 1,000 mm long carbon fiber yarns used as warp threads or weft threads are taken out of the respective sheets, by loosening without fuzzing and without twisting.

From the carbon fiber yarns, the deposited sizing agent is removed without disturbing the fiber arrangement.

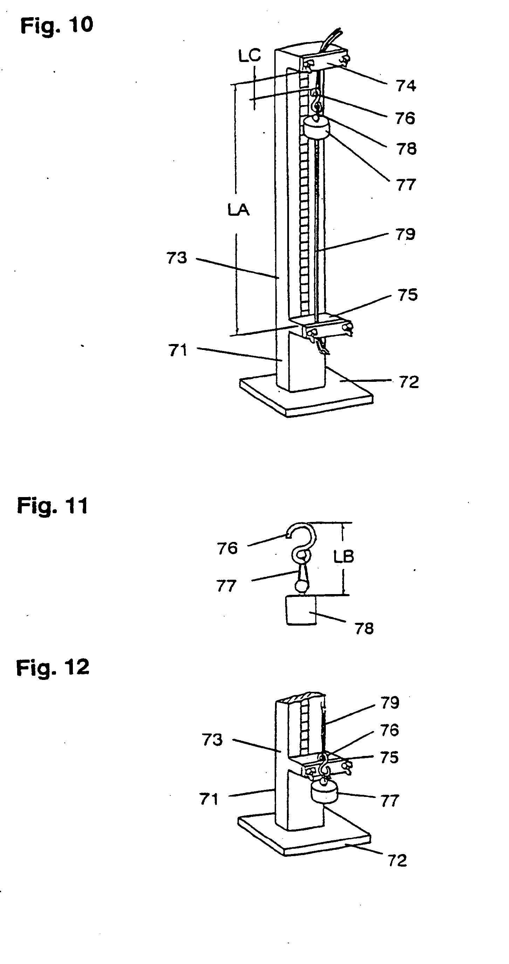

A measuring instrument 71 shown in Fig. 10 consists of a base 72, a graduated column 73 fixed on it vertically, a top clamp 74 installed at the top, a bottom clamp 75 installed below, a hook 76, a weight 77 and a cotton yarn 78 connecting the hook 76 with the weight 77.

A yarn 79 sampled as described above is fixed at its top end in the instrument 71 by the top clamp 74. Since the width of the fixed yarn 79, i.e., the thickness of the yarn 79 affects $FD_{(15)}$, the yarn 79 is fixed by the top clamp 74 so that the thickness of the yarn 79 may be uniform while the relation between the width B (mm) of the fixed yarn 79 and the fineness D (deniers) of the yarn satisfies the following equation.

$$B = 4 \times 10^{-4} \times D$$

Then, with a load of 4 mg/denier (not illustrated) applied at the bottom end of the yarn 79, the bottom end is fixed by the bottom claim 75 without twisting the yarn 79. The distance LA between the bottom end of the top clamp 74 and the top end of the bottom claim 75 (clamp distance) is 950 mm.

The detail of the hook 76, the weight 77 and the cotton yarn 78 connecting the hook 76 with the weight 77 is shown in Fig. 11. The hook 76 is formed by a metallic wire with a diameter of 1 mm, and has a hook portion bent with a radius of curvature of 5 mm in the central axis of the wire at its top, and a weight hanging portion connected with the cotton yarn 78 at its bottom. To the weight hanging portion, the weight 77 is attached by the cotton yarn 78. The distance LB between the top of the hook 76 and the upper face of the weight 77, with the hook 76, cotton yarn 78 and weight 77 connected straight, is 30 mm. The weights of the hook 76 and the cotton yarn 78 are made as light as possible, and the total weight obtained by adding the weight of the weight 77 to these weights is 15 g.

The hook 76 is manually hooked in the yarn 79 at the center in the transverse direction of the yarn 79 fixed by the top clamp 74 and the bottom clamp 75, with the top of the hook 76 positioned at 50 mm below the under face of the top clamp 74. The distance between the under face of the top clamp 74 and the initial top position of the hook 76 when the hook 76 is hooked in the yarn 79 is indicated by symbol LC in Fig. 10.

If the weight 77 hooked in the yarn 79 is released from hand, it starts dropping. With the drop of the weight 77, the hook 76 moves downward. However, the dropping of the hook 76 stops before long, being affected by the filament interlacements existing between the respective filaments of the yarn 79. So, the distance (cm) between the initial top position of the hook 76 and the terminating top position is measured.

This measurement is repeated 10 times for one sample yarn taken out of one piece of the woven fabric. Since three pieces of the woven fabric are used, 30 measured values in total can be obtained. The $FD_{(15)}$ is obtained as the average value of these measured values.

It can happen that the metallic hook 76 drops to the position of the bottom clamp 75, and in this case, the dropping distance is regarded to be 900 mm. In preparation for such a case, it must be ensured that the cotton yarn 78 and the weight 77 do not hit the bottom clamp 75, even if the hook 76 hits the bottom clamp 75. This can be achieved by forming a sufficient space between the under face of the bottom clamp 75 and the upper face of the base 72, as shown in Fig. 12.

The yarns 79 are sampled after the woven fabric is allowed to stand in an environment of 25°C and 60% relative humidity for 24 hours. The $FD_{(15)}$ is measured in an atmosphere of 25°C and 60% relative humidity.

If a sizing agent is deposited on the yarn 79, the $FD_{(15)}$ is affected by it, depending on the amount and state of the deposition. So, the sizing agent is perfectly removed before measurement. The sizing agent can be removed by heat-treating the yarn in 700°C nitrogen atmosphere for 1 hour. Even when the yarn 79 has the resin of prepreg or CFRP deposited or impregnated, the $FD_{(15)}$ is affected by it. So, the resin is perfectly removed before measurement. For example, if the deposited resin is a vinyl ester resin, it can be removed by heat-treating the yarn in 700°C nitrogen atmosphere for 5 hours.

Examples:

Woven carbon fiber fabric A:

A uni-directional woven fabric shown in Fig. 1. Prepared was a woven carbon fiber fabric 1 (A) of plain weave with 52,000-denier carbon fiber tows 2 respectively comprising 70,000 carbon filaments 3 as warp threads and 608-denier glass fiber auxiliary yarns 4 as weft threads (hence carbon fiber yarns are arranged in uni direction only) at a warp thread density of 0.87 ends/cm at a weft thread density of 2 picks/cm, with an areal carbon fiber unit weight of 500 $g/m^2$ and with the thread intersections fastened. For fastening the thread intersections, when the woven fabric 1 was produced, 50-denier low temperature melting copolyamide yarns paralleled with the auxiliary yarns of the weft threads were molten by a far infrared heater attached on the weaving machine, after inserting the weft, to bond the carbon fiber yarns 2 with the auxiliary yarns 4. The obtained woven fabric 1 (A) was bulky since the carbon filaments constituting the carbon fiber yarns 2 were interlaced with each other, and the thickness of the woven fabric was 1.1 mm. The $FD_{(15)}$ value of the carbon fiber yarns 2 taken out of the woven fabric 1 (A) was 6.3 cm. The clearances between the respectively adjacent carbon fiber yarns 2 were 1.2 mm.

Since the woven fabric 1 (A) was fastened at the thread intersections, the weave texture was not disturbed though the density of the woven fabric was coarse, and the woven fabric remained stable in form. The weaving speed expressed by the weight of the carbon fibers woven per hour reached 15 kg/1 hr since the carbon fiber tows were thick. The woven fabric could be produced at a very low cost.

Woven carbon fiber fabric B:

A uni-directional woven fabric for comparison. Prepared was a woven carbon fiber fabric B of plain weave with 50,400-denier carbon fiber yarns (each comprising seven 7,200-denier multi-filament bundles respectively comprising 12,000 carbon filaments, hence comprising 84,000 carbon filaments in total) as warp threads with 608-denier glass fiber auxiliary yarns as weft threads (hence carbon fiber yarns are arranged in uni direction only) at a warp thread density of 0.89 ends/cm at a weft thread density of 2 picks/cm with an areal carbon fiber unit weight of 500 $g/m^2$. In the obtained woven fabric, the carbon filaments constituting the carbon fiber yarns were arranged substantially in parallel and were little interlaced with each other. So, the filaments were densely bundled, and the thickness of the woven fabric was 0.8 mm. The $FD_{(15)}$ value of the carbon fiber yarns taken out of the woven fabric was 42.0 cm.

The woven fabric was coarsely dense and was not fastened at the thread intersections. So, the weave texture was simply disturbed, and the woven fabric was unstable in form. The weaving speed was 15 kg/1 hr as in the production of the woven carbon fiber fabric A, since the carbon fiber yarns of the warp threads were thick.

Woven carbon fiber fabric C:

A uni-directional woven fabric for comparison. Prepared was a woven carbon fiber fabric C of plain weave with 3,600-denier multi-filament yarns respectively comprising 6,000 carbon filaments as warp threads and 202.5-denier glass fiber auxiliary yarns as weft threads (hence carbon fiber yarns were arranged in uni direction only) at a warp thread density of 6.3 picks/cm at a weft thread density of 2 ends/cm, with an areal carbon fiber unit weight of 252 $g/m^2$ and with the thread intersections fastened. The fastening of thread intersections was effected as described for the woven fabric A. The areal carbon fiber unit weight of the woven fabric C was almost half that of the woven fabric A. The $FD_{(15)}$ value

of the carbon fiber yarns taken out of the woven fabric was 15.7 cm.

The weaving speed was as low as 7.5 kg/1 hr, being almost half that of the woven fabric A.

Features of the woven carbon fiber fabrics A, B and C are shown in Table 1.

Table 1

| Woven carbon fiber fabric | Woven fabric A | Woven fabric B | Woven fabric C |
|---|---|---|---|
| | Woven fabric of present invention | Comparative woven fabric | Comparative woven fabric |
| Weaving speed (kg/1 hr) | 15 | 15 | 7.5 |
| Whether or not thread intersections were fastened | Yes | No | Yes |

The above woven carbon fiber fabrics A, B and C were used to produce fiber reinforced plastic moldings according to the hand lay-up method (molding method I) in Example 1 and Comparative Example 1., and according to the vacuum bag molding method (molding method II) using the diffusion medium 27 (see Figs. 6 and 7) of the present invention, in Examples 2 and 3 and Comparative Examples 2 to 4.

Example 1

Two sheets of the woven carbon fabric A cut at 50 cm in the warp direction and 30 cm in the weft direction were used. The first sheet of the woven fabric A was coated with a room temperature curable vinyl ester resin with a viscosity of 3 poises uniformly and deaerated by a fluted deaeration roller, to prepare a 1st layer of the woven fabric, and the second sheet of the woven fabric A was laminated on the 1st layer of the woven fabric as the 2nd layer of the woven fabric with the warp carbon fiber yarns kept in the same direction as that of the 1st layer of the woven fabric, and coated and impregnated with the same resin as used for the 1st layer. The laminate was allowed to stand at 20°C, to cure the resin, for preparing a molding A.

Comparative Example 1

A molding B was prepared as described for preparing the molding A, except that the woven carbon fiber fabric B was used.

The respective properties of the molding A obtained in Example 1 and the molding B obtained in Comparative Example 1 are shown in Table 2. Each tensile property of a molding is expressed as a transfer ratio to show the property of the molding exhibited compared to that of the carbon fibers used, since the woven fabrics A and B were different in the properties of the carbon fibers used to make the respective woven fabrics.

Table 2

| Molding method I | Example 1 | Comparative Example 1 |
|---|---|---|
| | Molding A | Molding B |
| Woven carbon fiber fabric | Woven fabric A | Woven fabric B |
| Thickness molding board (mm) | 2.2 | 1.8 |
| Resin impregnated state | Almost perfect | Partially unimpregnated |
| Transfer ratio of tensile strength (%) | 92 | 72 |
| Transfer ratio of tensile modulus (%) | 100 | 90 |

The molding A produced by using the woven carbon fiber fabric A of the present invention was sufficiently impregnated with the resin, since the woven fabric was bulky, though somewhat thick, with the carbon fibers interlaced with each other in the carbon fiber yarns, even though the carbon fiber yarns were thick. Therefore, the transfer ratio of tensile strength was 92% and the transfer ratio of tensile modulus of elasticity was 100%, to sufficiently manifest the tensile properties of the carbon fibers used to obtain the woven fabric.

On the contrary, the molding B obtained by using the woven carbon fiber fabric B was not sufficiently impregnated with the resin in the molding board, leaving especially the central portions of the carbon fiber yarns unimpregnated, since the carbon fibers were not interlaced with each other in the carbon fiber yarns, hence densely packed. Therefore, the transfer ratio of tensile strength was 72% and the transfer ratio of tensile modulus of elasticity was 90%, not manifesting the tensile properties of the carbon fibers sufficiently.

Example 2

Prepared were two sheets of the woven carbon fiber fabric A of 100 cm in the width in the weft direction and 5 m in the length in the warp direction and three sheets of a chopped strand mat with a width of 100 cm and a length of 5 m formed by glass fibers with an areal glass fiber unit weight of 450 g/m$^2$.

On the mold 21 (see Fig. 6) coated with a releasing agent, at first the 1st sheet of the woven carbon fiber fabric A was laminated, and three sheets of the chopped strand mat were laminated one by one on it with the edges of the woven fabric A kept flush with the edges of the mat. Furthermore, on them, the 2nd sheet of the woven carbon fiber fabric A was laminated, to form a fibrous material 23 comprising 5 layers in total of the woven fabric and the mat.

On the fibrous material 23, a woven polyamide filament fabric was placed as the peel ply 26. On it, two meshed polyethylene sheets respectively with a thickness of 1.0 mm, with a mesh size of 2.6 mm x 2.6 mm and with a mesh opening rate (the ratio of the area of the meshes, with the entire area as 100) of 62% were placed as a diffusion medium 27 to cover the upper surface of the fibrous material 23.

Around the lateral sides of the fibrous material 23, a woven glass fiber fabric almost as thick as the fibrous material 23 was installed as the edge breather 24. On the under face of the edge breather 24, a suction opening 25 connected to a vacuum pump was installed.

The whole of the above was covered with a polyamide film used as the bag film 28, and the clearances at the respective peripheries of the bag film 28, the mold 21 and the suction opening 25 were sealed by a sealant 32, to keep the inside under reduced pressure.

At the center of the bag film 28, a resin supply pipe 29 was installed, and the clearance around the installed portion was sealed by a sealant 31.

Then, by a vacuum pump, the inside covered with the bag film 28 was kept at a reduced pressure of 755 Torrs, and the valve 30 installed on the resin supply pipe 29 was opened, to inject a room temperature curable vinyl ester resin with a viscosity of 3 poises into the fibrous material 23. The resin was sufficiently cured, and the peel ply 26 was removed. At the same time, the diffusion medium 27 and the bag film 28 were also removed, and a fiber reinforced plastic molding was taken out of the mold 21, as molding C.

Comparative Example 2

Molding D was produced as described for producing the molding C, except that the woven carbon fabric B was used instead of the woven carbon fabric A.

Comparative Example 3

A molding E was produced as described for producing the molding C, except that two sheets of the woven carbon fiber fabric C were used instead of one sheet of the woven carbon fiber fabric A.

The properties of the three moldings A, B and C are shown in Table 3. The lamination time in Table 3 is the time taken for cutting sheets of predetermined dimensions from a woven fabric roll and a mat roll and laminating them on a mold as a predetermined fibrous material. Since the lamination work was carried out by two workers, the time is the total time of two persons.

Table 3

| Molding method II | Example 2 | Comparative Example 2 | Comparative Example 3 |
|---|---|---|---|
| | Molding C | Molding D | Molding E |
| Woven carbon fiber fabric | Woven fabric A | Woven fabric B | Woven fabric C |
| Composition of fibrous material<br>  Woven fabric (sheets)<br>  Mat (sheets) | <br>2<br>3 | <br>2<br>3 | <br>4<br>3 |
| Lamination time (min) | 40 | 47 | 60 |
| Resin injection time (min) | 23 | 50 | 21 |

(continued)

| Molding method II | Example 2 | Comparative Example 2 | Comparative Example 3 |
|---|---|---|---|
| | Molding C | Molding D | Molding E |
| Resin impregnated state | Perfect | Partially unimpregnated | Perfect |

When the molding C was produced by using the woven carbon fiber fabric A of the present invention, the yarns were not frayed by cutting, since the woven fabric A had been fastened at the thread intersections. Furthermore, since the woven fabric A was large in the areal unit weight of fibers, the woven fabric as a whole was hard to some extent. So, even if the length was 5 m, it did not happen in the lamination work that the woven fabric was bent, or that the central portion of the woven fabric contacted the mold or the previously laminated sheet, and lamination could be completed substantially without any disturbance in the arranged fibers. The time taken for cutting 5 sheets of the woven fabric and the mat and laminating them was 40 minutes in total of two persons.

Since the diffusion medium for the resin was installed, the resin could be immediately diffused over the entire surface area of 1 m x 5 m, and could permeate the fibrous material in the normal direction. The time taken for resin injection was 23 minutes. After curing of the resin, the molded board was cut, to observe the section, and it was confirmed that the resin impregnation was perfect.

When the molding D was produced by using the woven carbon fiber fabric B, the yarns were frayed by cutting since the woven fabric B had the thread intersections not fastened. Furthermore, since the woven fabric was large in the areal unit weight of fibers and soft, the woven fabric as long as 5 m was bent due to its own weight when it was going to be laminated, and it took a long time to laminate the respective sheets without allowing that the central portion of the woven fabric contacted the mold or the previously laminated sheet lest the arranged fibers should be disturbed. The time taken for cutting five sheets of the woven fabric and the mat and laminating them was 47 minutes in total of two persons.

Since the woven fabric B had the yarns formed as densely bundled fibers, the overlying sheet of the woven fabric was poor in resin impregnability and penetrability, and before the resin impregnation was sufficiently achieved, the room temperature curable resin was cured in about 50 minutes. As a result, the underlying sheet of the woven fabric B in contact with the mold had portions not accessed by the resin, i.e., unimpregnated portions at portions far away from the injection port of the resin supply pipe. So, no satisfactory molded board could be obtained.

When the molding E was produced by using the woven carbon fiber fabric C, it did not happen that the central portion of the woven fabric contacted the mold or the previously laminated sheet since the thread intersections were fastened, but the time for cutting and laminating the sheets of the fibrous material was 60 minutes in total of two persons, i.e., 1.5 times that taken for the woven fabric A, since the number of laminated sheets was as large as 7.

Since the woven fabric C was small in the areal unit weight of carbon fibers per sheet, it was good in resin impregnability, and the time taken for resin injection was 21 minutes, being almost the same as in the case of the molding C.

Example 3

Prepared were two sheets of the woven carbon fiber fabric A of 100 cm in the width in the weft direction and 100 cm in the length in the warp direction and three sheets of a chopped strand mat of glass fibers with a width of 100 cm and a length of 100 cm with an areal unit weight of 450 g/m$^2$.

On the mold 21 (see Fig. 6) coated with a releasing agent, the first sheet of the woven carbon fiber fabric A was laminated, and on it, three sheets of the chopped strand mat were laminated one by one with the edges of the woven fabric A flush with the edges of the mat. Furthermore, on them, the second sheet of the woven carbon fiber fabric A was laminated, to form a fibrous material 23 comprising five sheets in total of the woven fabric and the mat.

On the fibrous material 23, a woven polyamide filament fabric was placed as the peel ply 26. On it, two meshed polyethylene sheets respectively with a thickness of 1.0 mm, with a mesh size of 2.6 mm x 2.6 mm with a mesh opening rate (the rate of the area of meshes, with the total area as 100) of 62% were placed as a diffusion medium 27 to cover the upper surface of the fibrous material 23.

Around the lateral sides of the fibrous material 23, a woven glass fiber fabric almost as thick as the fibrous material 23 was installed as the edge breather 24. On the under face of the edge breather 24, a suction opening 25 connected to a vacuum pump was installed.

The whole of the above was covered with a polyamide film used as the bag film 28, and the clearances at the peripheries of the bag film 28, the mold 21 and the suction opening 25 were sealed by a sealant 32 to keep the inside under reduced pressure.

At the central portion of the bag film 28, a resin supply pipe 29 was installed, and the clearance around the installing portion was sealed by a sealant 31.

Then, by a vacuum pump, the inside covered with the bag film 28 was kept at a reduced pressure of 755 Torrs, and the valve 30 installed on the resin supply pipe 29 was opened, to inject a room temperature curable vinyl ester resin with a viscosity of 3 poises into the fibrous material 23. The resin was immediately diffused over the entire surface of the fibrous material 23 by the diffusion medium 27. Then, the resin flowed through the clearances between the respective filaments of the carbon fiber yarns and through the clearances between the respective carbon fiber yarns in the upper sheet of the woven carbon fiber fabric A into the sheets of the chopped strand mat in the normal direction of the fibrous material 23. The time taken for the resin impregnation into the fibrous material 23 was 16 minutes. After the resin had been cured, the molding was taken out of the mold 21 and cut to observe the section. It was confirmed that the resin had been perfectly impregnated.

Comparative Example 4

Prepared was a woven carbon fiber fabric D of plain weave with 7,200-denier carbon fiber yarns respectively comprising 12,000 carbon filaments as warp threads and 608-denier glass fiber auxiliary yarns as weft threads (hence carbon fiber yarns were arranged in uni direction only) at a warp thread density of 6.20 ends/cm at a weft thread density of 2 picks/cm with an areal carbon fiber unit weight of 496 g/m$^2$. The clearances between the respective adjacent carbon fiber yarns in the obtained woven fabric were substantially 0 mm.

A fiber reinforced plastic molding was produced as described in Example 3, except that the woven carbon fiber fabric D was used instead of the woven carbon fiber fabric A. The resin was immediately diffused over the entire surface of the fibrous material 23, thanks to the action of the diffusion medium 27. However, since the woven fabric B positioned at the top of the fibrous material 23 had a large areal carbon fiber unit weight and substantially without little clearances between the carbon fiber yarns, the resin permeation toward the sheets of the chopped strand mat positioned below was not smooth. So, the resin did not flow sufficiently to the sheet of the woven fabric B positioned at the bottom, and 50 minutes after start of resin injection, the resin began to be gelled. The molding work failed.

**Claims**

1.  A woven carbon fiber fabric (1) comprising:

    carbon fiber yarns (2) as warp threads and auxiliary yarns (4) as weft threads,
    wherein the carbon fiber yarns (2) and the auxiliary yarns (4) form a woven structure of said fabric (1);
    **characterized in that**
    the carbon fiber yarns (2) are arranged in uni-direction only and each of the carbon fiber yarns (2) is formed of about 40,000 to about 400,000 carbon filaments (3), has filament interlacements between the filaments (3), a hook drop value in the range of from about 2 to about 30 cm and a fineness in the range of from about 25,000 to about 350,000 deniers;
    wherein each of clearances (C) between the adjacent carbon fiber yarns (2) is in the range of about 0.2 to about 2 mm: and
    wherein said warp threads (2) and said weft threads (4) are bonded at their intersections by a polymer having a low melting point.

2.  A woven carbon fiber fabric (6) comprising:

    first auxiliary yarns (9) as warp threads and second auxiliary yarns (10) as weft threads;
    wherein said first and second auxiliary yarns form a woven structure of said fabric (6);
    **characterized in that**
    in the woven structure formed by the auxiliary yarns (9, 10) respective carbon fiber yarns (7) are arranged in the direction of the warp threads, each of the carbon fiber yarns (7) is formed of from about 40,000 to about 400,000 carbon filaments (8), has filaments interlacements between the filaments (8), a hook drop value in the range of from about 2 to about 30 cm and a fineness in the range of from about 25,000 to about 350,000 deniers;
    wherein each of clearances between the adjacent carbon fiber yarn (7) is in the range of about 0.2 to about 2 mm; and
    wherein said carbon fiber yarns (7) and said weft threads (10) are bonded at their intersections by a polymer having a low melting point.

3.  The uni-directional woven carbon fiber fabric according to claim 1 or 2, which has a bulk density of about 0.65 g/cm$^3$ or less.

4. The uni-directional woven carbon fiber fabric according to claim 1 or 2, wherein each of the carbon fiber yarns (2, 7) is formed of from about 40,000 to about 100,000 filaments and has a fineness in the range of about 30,000 to about 70,000 deniers and the fabric has an areal unit weight in the range of from about 400 to about 700 g/m$^2$.

5. A fiber reinforced plastic molding, which is produced by integrating a fibrous material and a matrix resin, wherein the fibrous material comprises the woven carbon fiber fabric as defined in any one of claims 1 to 4.

6. The fiber reinforced plastic molding according to claim 5, which further comprises an additional molding member, wherein the additional molding member has grooves on a side facing the fiber reinforced plastic, and the grooves are filled with the resin.

7. A method for producing a fiber reinforced plastic molding, which comprises:

providing a vacuum bag molding apparatus comprising (a) a mold (21), (b) a fibrous material (23) placed on the mold (21), (c) a bag film (28) installed on the mold (21) so as to contain the fibrous material (23) inside the bag film (28) and to seal the inside from outside, (d) a resin supply pipe (29) for supplying a resin to be molded into inside the bag film (28), (e) a resin supply control valve (30) installed in the resin supply pipe (29), and (f) an air exhaust opening (25) for keeping the space in the bag film (28) at a reduced pressure;
discharging air in the space in the bag film (28) through the air exhaust opening (25) till the space reaches a predetermined reduced pressure;
opening the resin supply control valve (30) to supply the resin through the resin supply pipe (29) into the fibrous material (23); and
closing the resin supply control valve (30) after completion of the resin supply and allowing the resin to cure, wherein:

the fibrous material is partially or wholly formed of the woven carbon fiber fabric as defined in any one of claims 1 to 4;
the resin is curable at room temperature; and
a diffusion medium for diffusing a flow of the resin is provided in contact with the fibrous material (23).

8. The method for producing a fiber reinforced plastic molding according to claim 7, wherein said diffusion medium is formed with a molding member (44, 45) having grooves (60) provided in a surface of the molding member (44, 45) for diffusing the flow of the resin.

9. The method for producing a fiber reinforced plastic molding according to claim 8, wherein said molding member (44, 45) is formed with a foamed material.


**Patentansprüche**

1. Kohlenstofffasergewebe (1), umfassend:

Kohlenstofffaserfäden (2) als Kettenfäden und Hilfsfäden (4) als Schussfäden, wobei die Kohlenstofffaserfäden (2) und die Hilfsfäden (4) eine gewebte Struktur des Gewebes (1) bilden;
**dadurch gekennzeichnet, dass**
die Kohlenstofffaserfäden (2) nur in einer Richtung angeordnet sind und jeder der Kohlenstofffaserfäden (2) aus ca. 40.000 bis ca. 400.000 Kohlenstofffilamenten (3) gebildet ist, Filamentenverflechtungen zwischen den Filamenten (3), einen Hakenfallwert im Bereich von ca. 2 bis ca. 30 cm und eine Feinheit im Bereich von ca. 25.000 bis ca. 350.000 den aufweist;
wobei jeder der Abstände (C) zwischen benachbarten Kohlenstofffaserfäden (2) im Bereich von ca. 0,2 bis ca. 2 mm liegt; und
wobei die Kettenfäden (2) und die Schussfäden (4) an ihren Schnittpunkten durch ein Polymer verbunden sind, das einen niedrigen Schmelzpunkt aufweist.

2. Kohlenstofffasergewebe (6), umfassend:

erste Hilfsfäden (9) als Kettenfäden und zweite Hilfsfäden (10) als Schussfäden; wobei die ersten und zweiten Hilfsfäden eine gewebte Struktur des Gewebes (6) bilden;

**dadurch gekennzeichnet, dass**

in der durch die Hilfsfäden (9, 10) gebildeten gewebten Struktur entsprechende Kohlenstofffaserfäden (7) in der Richtung der Kettenfäden angeordnet sind, jeder der Kohlenstofffaserfäden (7) aus ca. 40.000 bis ca. 400.000 Kohlenstofffilamenten (8) gebildet ist, Filamentenverflechtungen zwischen den Filamenten (8), einen Hakenfallwert im Bereich von ca. 2 bis ca. 30 cm und eine Feinheit im Bereich von ca. 25.000 bis ca. 350.000 den aufweist;

wobei jeder der Abstände zwischen benachbarten Kohlenstofffaserfäden (7) im Bereich von ca. 0,2 bis ca. 2 mm liegt; und

wobei die Kohlenstofffaserfäden (7) und die Schussfäden (10) an ihren Schnittpunkten durch ein Polymer verbunden sind, das einen niedrigen Schmelzpunkt aufweist.

3. Einseitig gerichtetes Kohlenstofffasergewebe nach Anspruch 1 oder 2, das eine Fülldichte von ca. 0,65 g/cm$^3$ oder weniger aufweist.

4. Einseitig gerichtetes Kohlenstofffasergewebe nach Anspruch 1 oder 2, wobei jeder der Kohlenstofffaserfäden (2, 7) aus ca. 40.000 bis ca. 100.000 Filamenten gebildet ist und eine Feinheit im Bereich von ca. 30.000 bis ca. 70.000 den aufweist und das Gewebe ein Flächeneinheitsgewicht im Bereich von ca. 400 bis ca. 700 g/m$^2$ aufweist.

5. Faserverstärktes Kunststoffformteil, das durch Verflechten eines faserförmigen Materials und eines Matrixharzes erzeugt wird, wobei das faserförmige Material das Kohlenstofffasergewebe nach einem der Ansprüche 1 bis 4 umfasst.

6. Faserverstärktes Kunststoffformteil nach Anspruch 5, das ferner ein zusätzliches Formelement umfasst, wobei das zusätzliche Formelement Nuten auf einer Seite, die dem faserverstärkten Kunststoff zugewandt ist, aufweist, und die Nuten mit dem Harz gefüllt sind.

7. Verfahren zum Herstellen eines faserverstärkten Kunststoffformteils, das umfasst:

Vorsehen einer Vakuumbeutel-Formvorrichtung, umfassend (a) eine Gussform (21), (b) ein faserförmiges Material (23), das auf der Gussform (21) angeordnet ist, (c) eine Beutelfolie (28), die auf der Gussform (21) angeordnet ist, so dass das faserförmige Material (23) innerhalb der Beutelfolie (28) enthalten ist und die Innenseite gegen die Außenseite abdichtet, (d) ein Harzzufuhrrohr (29) zum Zuführen eines Harzes, das in das Innere der Beutefolie (28) eingeformt werden soll, (e) eine Harzzufuhr-Steuerventil (30), das in dem Harzzufuhrrohr (29) eingebaut ist, und (f) eine Luftauslassöffnung (25), um den Raum der Beutelfolie (28) auf einem verringerten Druck zu halten;

Ausstoßen der Luft in dem Raum in der Beutelfolie (28) durch die Luftauslassöffnung (25), bis der Raum einen vorbestimmten verringerten Druck erreicht;

Öffnen des Harzzufuhr-Steuerventils (30), um das Harz durch das Harzzufuhrrohr (29) in das faserförmige Material (23) zuzuführen; und

Schließen des Harzzufuhr-Steuerventils (30) nach Beendigung der Harzzufuhr und Aushärtenlassen des Harzes, wobei:

das faserförmige Material teilweise oder vollständig aus dem Kohlenstofffasergewebe nach einem der Ansprüche 1 bis 4 gebildet ist;

das Harz bei Raumtemperatur aushärtbar ist; und

ein Diffusionsmedium zum Verteilen eines Stroms des Harzes in Kontakt mit dem faserförmigen Material (23) vorgesehen ist.

8. Verfahren zur Herstellung eines faserverstärkten Kunststoffformteils nach Anspruch 7, wobei das Diffusionsmedium mit einem Formelement (44, 45) ausgebildet ist, das Nuten (60) aufweist, die in einer Oberfläche des Formelements (44, 45) zum Verteilen des Stroms des Harzes vorgesehen sind.

9. Verfahren zum Erzeugen eines faserverstärkten Kunststoffformteils nach Anspruch 8, wobei das Formelement (44, 45) mit einem Schaumstoff gebildet wird.

**Revendications**

1. Tissu en fibre de carbone (1) comprenant :

   des fils de fibre de carbone (2) en tant que fils de chaîne et des fils auxiliaires (4) en tant que fils de trame,
   les fils de fibre de carbone (2) et les fils auxiliaires (4) formant une structure tissée dudit tissu (1) ;
   **caractérisé en ce que**
   les fils de fibre de carbone (2) sont disposés dans une seule direction et chacun des fils de fibre de carbone (2) est formé d'environ 40 000 à 400 000 filaments de carbone (3), présente des entrelacements de filament entre les filaments (3), une valeur d'abaissement de crochet dans la plage d'environ 2 à environ 30 cm et une finesse dans la plage d'environ 25 000 à environ 350 000 deniers ;
   chacun des espaces (C) entre les fils de fibre de carbone (2) adjacents se situant dans la plage d'environ 0,2 à environ 2 mm ; et
   lesdits fils de chaîne (2) et lesdits fils de trame (4) étant collés à leurs intersections par un polymère présentant un bas point de fusion.

2. Tissu en fibre de carbone (6) comprenant :

   des premiers fils auxiliaires (9) en tant que fils de chaîne et des seconds fils auxiliaires (10) en tant que fils de trame ;
   lesdits premier et second fils auxiliaires formant une structure tissée dudit tissu (6) ;
   **caractérisé en ce que**
   dans la structure tissée formée par les fils auxiliaires (9, 10), les fils de fibre de carbone (7) respectifs sont disposés dans la direction des fils de chaîne, chacun des fils de fibre de carbone (7) est formé d'environ 40 000 à 400 000 filaments de carbone (3), présente des entrelacements de filament entre les filaments (3), une valeur d'abaissement de crochet dans la plage d'environ 2 à environ 30 cm et une finesse dans la plage d'environ 25 000 à environ 350 000 deniers ;
   chacun des espaces (C) entre les fils de fibre de carbone (2) adjacents se situant dans la plage d'environ 0,2 à environ 2 mm ; et
   lesdits fils de fibre de carbone (7) et lesdits fils de trame (4) étant collés à leurs intersections par un polymère présentant un bas point de fusion.

3. Tissu unidirectionnel en fibre carbone selon la revendication 1 ou 2, présentant une densité apparente d'environ 0,65 g/cm$^3$ ou moins.

4. Tissu unidirectionnel en fibre carbone selon la revendication 1 ou 2, chacun des fils de fibre de carbone (2, 7) étant formé d'environ 40 000 à environ 100 000 filaments et présentant une finesse dans la plage d'environ 30 000 à environ 70 000 deniers et le tissu présentant un poids surfacique dans la plage d'environ 400 à environ 700 g/m$^2$.

5. Pièce moulée en plastique renforcé par des fibres, produite par intégration d'un matériau fibreux et d'une résine de matrice, le matériau fibreux comprenant le tissu en fibre de carbone tel qu'il est défini selon l'une quelconque des revendications 1 à 4.

6. Pièce moulée en plastique renforcé par des fibres selon la revendication 5, comprenant en outre un élément de moulage additionnel, l'élément de moulage additionnel présentant des rainures sur un côté tourné vers le plastique renforcé par des fibres, et les rainures étant remplies de résine.

7. Procédé de production d'une pièce moulée en plastique renforcée par des fibres, comprenant les étapes consistant à :

   fournir un appareil de moulage au sac sous vide comprenant (a) un moule (21), (b) un matériau fibreux (23) placé sur le moule (21), (c) un film de poche (28) installé sur le moule (21) de manière à contenir le matériau fibreux (23) à l'intérieur du film de poche (28) et à étanchéifier l'intérieur par rapport à l'extérieur, (d) un tuyau d'amenée de résine (29) destiné à amener une résine à mouler à l'intérieur du film de poche (28), (e) une vanne de régulation d'amenée de résine (30) installée dans le tuyau d'amenée de résine (29), et (f) une ouverture d'échappement d'air (25) destinée à maintenir l'espace dans le film de poche (28) à une pression réduite ;
   évacuer l'air dans l'espace dans le film de poche (28) à travers l'ouverture d'échappement d'air (25) jusqu'à ce que l'espace atteigne une pression réduite prédéterminée ;
   ouvrir la vanne de régulation d'amenée de résine (30) pour amener la résine à travers le tuyau d'amenée de résine (29) à l'intérieur du matériau fibreux (23) ; et
fermer la vanne de régulation d'amenée de résine (30) une fois l'amenée de résine achevée et permettre à la résine de cuire :

le matériau fibreux étant partiellement ou entièrement formé du tissu en fibre de carbone tel qu'il est défini selon l'une quelconque des revendications 1 à 4 ;
la résine pouvant durcir à température ambiante ; et
un milieu de diffusion pour diffuser un flux de résine étant disposé en contact avec le matériau fibreux (23).

8. Procédé de production d'une pièce moulée en plastique renforcé par des fibres selon la revendication 7, ledit milieu de diffusion étant formé avec un élément de moulage (44, 45) présentant des rainures (60) ménagées dans une surface de l'élément de moulage (44, 45) pour diffuser le flux de résine.

9. Procédé de production d'une pièce moulée en plastique renforcé par des fibres selon la revendication 8, ledit élément de moulage (44, 45) étant formé avec un matériau expansé.

EP 0 909 845 B1

**Fig. 1**

**Fig. 2**

20

**Fig. 3**

**Fig. 4**

**Fig. 5**

**Fig. 6**

# Fig. 7

27

34    33

# Fig. 8

48
46
42    50    44    43    51    49    45    47    52
62
61
53    53
41

# Fig. 9

54    57
44
60
59    58
60
56    60    55

## Fig. 10

## Fig. 11

## Fig. 12

24

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 4714642 A

- US 4902215 A